(19) Europäisches Patentamt
European Patent Office
Office européen des brevets

(11) Veröffentlichungsnummer: **0 124 819**
**B1**

(12) # EUROPÄISCHE PATENTSCHRIFT

(45) Veröffentlichungstag der Patentschrift: **06.08.86**

(51) Int. Cl.⁴: **C 07 F 9/40**

(21) Anmeldenummer: **84104561.0**

(22) Anmeldetag: **24.04.84**

(54) **2-Alkylcarbonatethanphosphonsäuredialkylester sowie deren Verwendung zur Herstellung von Vinylphosphonsäuredialkylester.**

(30) Priorität: **07.05.83 DE 3316888**

(43) Veröffentlichungstag der Anmeldung: **14.11.84 Patentblatt 84/46**

(45) Bekanntmachung des Hinweises auf die Patenterteilung: **06.08.86 Patentblatt 86/32**

(84) Benannte Vertragsstaaten: **CH DE FR GB IT LI**

(56) Entgegenhaltungen:
**EP - A - 0 065 741**

**SOVIET INVENTIONS ILLUSTRATED, Section Ch: Chemical, Woche D42, 25. November 1981, Derwent Publications Ltd., Agricultural Chemistry, Seite 1, Nr. 77135D142, London, GB;**

(73) Patentinhaber: **BAYER AG, Konzernverwaltung RP Patentabteilung, D-5090 Leverkusen 1 Bayerwerk (DE)**

(72) Erfinder: **Buysch, Hans-Josef, Dr., Glindholz Strasse 88b, D-4150 Krefeld (DE)**
Erfinder: **Mues, Peter, Dr., Breslauer Strasse 31, D-4150 Krefeld 1 (DE)**

**EP 0 124 819 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft neue 2-Alkylcarbonatethanphosphonsäuredialkylester sowie deren Verwendung zur Herstellung von Vinylphosphonsäuredialkylester.

Es ist bekannt, Vinylphosphonsäuredialkylester herzustellen aus 2-Brom- oder aus 1,1- bzw. 1,2-Dichlorethanphosphonsäureester (vgl. J. Appl. Chem. *11*, 352 (1961); Z. obsc. Chim. *29*, 3947 (1959), C.A. *54*, 20844 (1960)). Während die Herstellung über die 2-Bromethanphosphonsäureester umständlich ist und z.T. nur geringe Ausbeuten an Vinylphosphonsäurediester erhalten werden, ist die Herstellung ausgehend von Dichlorethanphosphonsäureester technisch aufwendig, da zunächst Vinylchlorid mit Phosphortrichlorid in Gegenwart von Sauerstoff umgesetzt wird und die erhaltenen Dichlorethanphosphonsäureester dann weiter mit Triethylamin und Zinkstaub in Gegenwart von Alkoholen umgesetzt werden.

Es ist weiterhin bekannt, Vinylphosphonsäuredialkylester durch Thermolyse von 2-Acetoxyethanphosphonsäuredialkylester unter Abspaltung von Essigsäure herzustellen (vgl. Nippon Kagaku Kaishi *10*, 1991 (1972)). Die Ausbeute beträgt jedoch nach diesem Verfahren nur etwa 50% und die Reaktionstemperatur liegt mit etwa 550 bis 600° C sehr hoch. Die Herstellung von Vinylphosphonsäuredialkylester aus den entsprechenden 2-Acetoxyethanphosphonsäureestern ist ausserdem aus der DE-OS 3120438 bekannt. Danach werden die 2-Acetoxyethanphosphonsäuredialkylester in Gegenwart saurer oder basischer Katalysatoren auf 150 bis 270° C erhitzt und das dabei anfallende Reaktionsprodukt mit Orthoestern, z.B. Orthokohlensäuretetramethylester, Orthoameisensäuretrimethylester oder Orthoessigsäuretrimethylester, bei 30 bis 200° C weiter umgesetzt. Gemäss den Beispielen der DE-OS betragen die Ausbeuten an Vinylphosphonsäurediestern nur etwa 70 bis 85%, wobei noch zu berücksichtigen ist, dass die primär entstehenden Vinylphosphonsäurehalbester mit teuren Orthoestern weiter umgesetzt werden müssen. Da die zuvor geschilderten Verfahren zum Teil beträchtliche Nachteile besitzen, ist ein Verfahren erwünscht, das Vinylphosphonsäuredialkylester in hohen Ausbeuten und in wirtschaftlicher Weise zugänglich macht.

Es wurde nun gefunden, dass man auf einfache und wirtschaftliche Weise Vinylphosphonsäuredialkylester herstellen kann, wenn man 2-Alkylcarbonatethanphosphonsäuredialkylester einer katalysierten thermischen Spaltung unterwirft.

Gegenstand der vorliegenden Erfindung sind demnach 2-Alkylcarbonatethanphosphonsäuredialkylester der allgemeinen Formel (I)

$$R^3O\overset{\overset{O}{\|}}{C}O\overset{\overset{R^2}{|}}{C}HCH_2\overset{\overset{O}{\|}}{P}(OR^1)_2 \qquad (I),$$

worin

$R^1$ und $R^3$ gleich oder verschieden sind und für eine Alkylgruppe mit 1 bis 4 Kohlenstoffatomen stehen und

$R^2$ Wasserstoff, eine Alkylgruppe mit 1 bis 4 Kohlenstoffatomen oder Phenyl, bevorzugt Wasserstoff oder Methyl bedeutet.

Als 2-Alkylcarbonatethanphosphonsäuredialkylester, die erfindungsgemass erhalten werden können, seien z.B. genannt: Methylcarbonatethanphosphonsäuredimethylester, Methylcarbonatethanphosphonsäurediethylester, Ethylcarbonatethanphosphonsäurediethylester und Ethylcarbonatethanphosphonsäuredimethylester.

Die 2-Alkylcarbonatethanphosphonsäuredialkylester der Formel (I) können auf einfache Weise erhalten werden, indem 2-Carboxyethanphosphonsäuredialkylester der Formel (III)

$$R^4\overset{\overset{O}{\|}}{C}O\overset{\overset{R^2}{|}}{C}HCH_2\overset{\overset{O}{\|}}{P}(OR^1)_2 \qquad (III),$$

worin

$R^1$ und $R^4$ gleich oder verschieden sind und für eine Alkylgruppe mit 1 bis 4 Kohlenstoffatomen stehen und $R^4$ ausserdem Wasserstoff sein kann und

$R^2$ die oben genannte Bedeutung hat,

mit Kohlensäuredialkylester der Formel (IV)

$$R^3O\overset{\overset{O}{\|}}{C}OR^3 \qquad (IV),$$

worin

$R^3$ die oben genannte Bedeutung hat,

in Anwesenheit von Umesterungskatalysatoren bei etwa 110 bis 160° C umgeestert und der entstandene Carbonsäureester ($R^4COOR^3$) abdestilliert wird.

Bevorzugte Verbindungen der Formeln (I), (III) und (IV) sind solche, in denen die Alkylgruppen 1 oder 2 Kohlenstoffatome besitzen. Als Alkylreste seien genannt: Methyl, Ethyl, n-Propyl, iso-Propyl, n-Butyl, iso-Butyl und tert.-Butyl, bevorzugt Methyl und Ethyl.

Als 2-Carboxyethan-phosphonsäuredialkylester der Formel (III) kommen z.B. in Frage: 2-Acetoxy-, 2-Propoxy- oder 2-Butoxy-ethanphosphonsäuredimethyl-, -diethyl-, -diisopropyl- und -di-n-butylester. Bevorzugt sind die Dimethyl- und Diethylester der Acetoxyethanphosphonsäure.

Als Kohlensäuredialkylester der Formel (IV) seien genannt: Dimethyl-, Diethyl-, Di-n-propyl, Diisopropyl-, Di-n-butyl-, Diisobutyl- und Di-tert.-butylester der Kohlensäure, bevorzugt Kohlensäuredimethylester und Kohlensäurediethylester.

Als Umesterungskatalysatoren, die in Mengen von etwa 0,001 bis 5 Gew.-%, bevorzugt 0,1 bis 1 Gew.-%, bezogen auf die Menge an eingesetzter Verbindung der Formel (III), eingesetzt werden, seien genannt: $TiX_4$, $SnX_4$, $AlX_3$, $FeX_3$, $ZnX_2$, $ZrX_4$, $MoX_5$ und/oder $VX_5$, worin X Halogen, wie Chlor oder Brom, Carboxy, wie Acetoxy, Alkoxy, wie Methoxy oder Ethoxy, oder Aryloxy, wie Phenoxy, darstellt.

Die Umesterung der 2-Carboxyethan-phosphonsäuredialkylester der Formel (III) wird üblicherweise bei Temperaturen von etwa 100 bis 220° C, bevorzugt bei 110 bis 190° C, besonders bevorzugt bei 120 bis 140° C, durchgeführt.

Dabei können die Kohlensäureester der Formel (IV), bezogen auf die Menge an 2-Carboxyethanphosphonsäuredialkylester, im Unterschuss, Überschuss oder in stöchiometrischen Mengen eingesetzt werden. Bevorzugt werden die Kohlensäureester im Molverhältnis von 1:1 bis 8:1 eingesetzt (Kohlensäureester der Formel (IV): Phosphonsäureester der Formel (III)).

Die Umesterung kann mit oder ohne ein inertes organisches Lösungsmittel durchgeführt werden. Als inerte organische Lösungsmitel kommen z.B. in Frage: Xylole, halogenierte Kohlenwasserstoffe, wie o-Dichlorbenzol, oder Ether, wie Anisol.

Der bei der Umesterung entstehende Carbonsäurealkylester ($R^4COOR^3$) wird zweckmässigerweise aus dem Reaktionsgemisch abdestilliert.

Aus dem verbleibenden Rückstand können dann die 2-Alkylcarbonatethanphosphonsäuredialkylester der Formel (I) durch Destillation unter vermindertem Druck bei etwa 0,001 bis 100 mbar, bevorzugt bei 0,01 bis 20 mbar, isoliert und vom Umesterungskatalysator befreit werden. Neben der Destillation kann der Umesterunskatalysator auch durch ein geeignetes Extraktions- oder Adsorptionsverfahren oder durch Behandlung mit Ionenaustauschern entfernt werden, jedoch ist die Entfernung des Umesterungskatalysators für die anschliessende Spaltung der 2-Alkylcarbonatethanphosphonsäuredialkylester der Formel (I) nicht zwingend erforderlich.

Die Umesterungskatalysatoren können z.B. durch Extraktion mit Wasser oder mit verdünnten wässerigen Säuren, wie Salzsäure, Schwefelsäure oder Essigsäure, oder durch ein Adsorptionsverfahren, wie die Adsorption an Aktivkohle oder Kieselgur, aus dem Reaktionsgemisch entfernt werden. Weiterhin ist es, wie oben erwähnt, möglich, Ionenaustauscher zur Entfernung der Umesterungskatalysatoren einzusetzen. Solche Ionenaustauscher sind beispielsweise säureaktivierte Bleicherden oder Austauscherharze auf der Basis sulfonierter Styrol-Divinyl-Benzol-Copolymerisate.

Zur Herstellung der Vinylphosphonsäurediester der allgemeinen Formel (II)

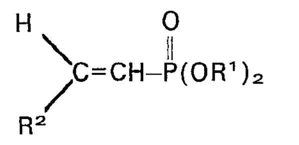 (II),

worin

$R^1$ eine Alkylgruppe mit 1 bis 4, bevorzugt 1 bis 2, Kohlenstoffatomen darstellt und

$R^2$ für Wasserstoff, eine Alkylgruppe mit 1 bis 4 Kohlenstoffatomen oder Phenyl, bevorzugt für Wasserstoff oder Methyl steht,

werden erfindungsgemäss die 2-Alkylcarbonatethanphosphonsäuredialkylester der allgemeinen Formel (I)

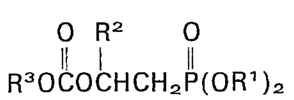 (I),

worin

$R^1$ und $R^3$ gleich oder verschieden sind und für eine Alkylgruppe mit 1 bis 4, bevorzugt 1 bis 2, Kohlenstoffatomen stehen und

$R^2$ Wasserstoff, eine Alkylgruppe mit 1 bis 4 Kohlenstoffatomen oder Phenyl, bevorzugt Wasserstoff oder Methyl bedeutet,

in Gegenwart von Katalysatoren erhitzt.

Nach dem erfindungsgemässen Verfahren werden dabei die 2-Alkylcarbonatethanphosphonsäuredialkylester der Formel (I) auf Temperaturen von etwa 160 bis 250° C, bevorzugt auf 180 bis 230° C, erhitzt. Dabei ist es vorteilhaft, wenn der Druck auf etwa 1 bis 200 mbar, bevorzugt 20 bis 150 mbar, vermindert wird.

Als Katalysatoren für die thermische Spaltung der 2-Alkylcarbonatethanphosphonsäuredialkylester kommen beispielsweise die Verbindungen des Lithiums, Natriums, Kaliums, Rubidiums, Cäsiums, Magnesiums, Calciums, Zinks, Strontiums, Cadmiums, Bariums, Thalliums und/oder des Bleis, bevorzugt die Verbindungen der Alkali- und/oder Erdalkalimetalle, in Betracht. Im allgemeinen werden die Hydroxide, Alkoholate oder die alkalisch reagierenden Salze, wie die Carbonate oder die Carboxylate, der genannten Metalle eingesetzt. Bevorzugt werden in das erfindungsgemässe Verfahren eingesetzt die Carbonate, die Carboxylate, die Alkoholate und/oder die Hydroxide des Natriums und/oder des Kaliums, wie Natriumhydroxid, Natriummethanolat, Kaliumcarbonat, Natriumacetat und Kaliumisooctylat.

Die Katalysatoren werden in Mengen von etwa 0,01 bis 5 Gew.-%, bevorzugt 0,1 bis 3 Gew.-%, besonders bevorzugt 0,5 bis 2 Gew.-%, bezogen auf die Einsatzmenge des 2-Alkylcarbonatethanphosphonsäuredialkylesters, eingesetzt.

Die thermische Spaltung der Alkylcarbonatethanphosphonsäureester kann dabei so durchgeführt werden, dass man den Alkylcarbonatethanphosphonsäureester mit beispielsweise Kaliumcarbonat einige Zeit auf etwa 180 bis 200° C unter vermindertem Druck erhitzt. Die dabei erhaltenen Spaltprodukte werden in einer gekühlten Vorlage kondensiert. Zur Verhinderung einer Polymerisation können entsprechende Inhibitoren, wie Hydrochinon oder Phenothiazin, zugesetzt werden. Anschliessend kann das Reaktionsprodukt durch Destillation unter vermindertem Druck bei etwa 0,01 bis 100, bevorzugt 0,01 bis 20 mbar, gereinigt werden. Es ist auch möglich, die Spaltprodukte separat in einer gekühlten Vorlage aufzufangen, wobei der gewünschte Vinylphosphonsäureester direkt in hoher Reinheit gewonnen wird.

Vinylphosphonsäuredialkylester der Formel (II) sind bekannte Zwischenprodukte zur Herstellung von u.a. Flammhemm-Mitteln (vgl. DE-OS 2452369). Sie dienen ausserdem auch als Comonomere für die Herstellung synthetischer Polymere (vgl. DE-AS 1052118 und J. Chem. Soc. *1956*, 4607).

*Beispiel 1*

Ethylcarbonatethanphosphonsäurediethylester:

224 g (1 Mol) 2-Acetoxyethanphosphonsäurediethylester, 472 g (4 Mol) Diethylcarbonat und 5 ml Tetrabutyltitanat wurden an einer 1,2 m Füllkörperkolonne während 5 Stunden auf eine Innentemperatur von 127 bis 135° C erhitzt. Es wurden über Kopf 83 g Ethylacetat abdestilliert. Nach Entfernen des überschüssigen Diethylcarbonats unter reduziertem Druck bei 10 bis 60 mbar verblieben 249 g Rohprodukt. Durch Destillation bei 0,03 mbar wurden 204 g der Titelverbindung rein erhalten, $Kp._{0.03\,mbar}$ 89 bis 92° C, $n_D^{20}$ = 1,4309 (Ausbeute 80%, bezogen auf 2-Acetoxyethanphosphonsäurediethylester).

*Beispiel 2*

Vinylphosphonsäurediethylester:

a) 85 g (0,334 Mol) Ethylcarbonatethanphosphonsäurediethylester aus Beispiel 1 wurden mit 200 mg Kaliumcarbonat versetzt und 2,5 Stunden auf 190° C unter vermindertem Druck, der anfänglich 300 mbar betrug und gegen Ende der Reaktion bis auf 20 mbar reduziert wurde, erhitzt. Die Spaltprodukte wurden in einer auf 0° C gekühlten Vorlage kondensiert, das $CO_2$ wurde in einer mit flüssigem Stickstoff gekühlten Falle absorbiert. Durch Destillation des Kondensates unter vermindertem Druck wurden erhalten: 47 g Vinylphosphonsäurediethylester ($Kp._{9\,mbar}$ 80 bis 82° C), 10 g nichtgespaltener Ethylcarbonatethanphosphonsäurediethylester und 14 g Ethanol. Die Ausbeute betrug 97%, bezogen auf umgesetzten Ethylcarbonatethanphosphonsäurediethylester.

b) 44 g (0,173 Mol) Ethylcarbonatethanphosphonsäurediethylester, der wie in Beispiel 1 hergestellt, jedoch nicht destilliert wurde, wurden mit 400 mg Kaliumcarbonat versetzt und wie in Beispiel 2a) beschrieben umgesetzt. Durch Destillation unter vermindertem Druck wurden erhalten: 14,4 g Vinylphosphonsäurediethylester und 15 g Ethylcarbonatethanphosphonsäurediethylester. Die Ausbeute betrug 77%, bezogen auf umgesetzten Ethylcarbonatethanphosphonsäurediester.

## Patentansprüche

1. 2-Alkylcarbonatethanphosphonsäuredialkylester der Formel

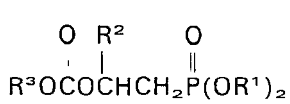

worin

$R^1$ und $R^3$ gleich oder verschieden sind und für eine Alkylgruppe mit 1 bis 4 Kohlenstoffatomen stehen und

$R^2$ Wasserstoff, eine Alkylgruppe mit 1 bis 4 Kohlenstoffatomen oder Phenyl bedeutet.

2. Verfahren zur Herstellung von Vinylphosphonsäuredialkylester der Formel

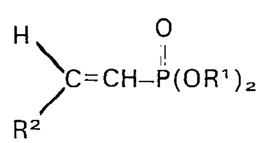

worin

$R^1$ eine Alkylgruppe mit 1 bis 4 Kohlenstoffatomen darstellt und

$R^2$ für Wasserstoff, eine Alkylgruppe mit 1 bis 4 Kohlenstoffatomen oder Phenyl steht,

dadurch gekennzeichnet, dass man 2-Alkylcarbonatethanphosphonsäuredialkylester der allgemeinen Formel

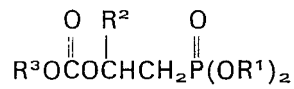

worin

$R^1$ und $R^3$ gleich oder verschieden sind und für eine Alkylgruppe mit 1 bis 4 Kohlenstoffatomen stehen und

$R^2$ Wasserstoff, eine Alkylgruppe mit 1 bis 4 Kohlenstoffatomen oder Phenyl bedeutet,

in Gegenwart von Katalysatoren erhitzt.

3. Verfahren nach Anspruch 2, dadurch gekennzeichnet, dass man als Katalysatoren die Hydroxide, Alkoholate oder die alkalisch reagierenden Salze des Lithiums, Natriums, Kaliums, Rubidiums, Cäsiums, Magnesiums, Calciums, Zinks, Strontiums, Cadmiums, Bariums, Thalliums und/oder Bleis einsetzt.

4. Verfahren nach Ansprüchen 2 und 3, dadurch gekennzeichnet, dass man die Carbonate, die Carboxylate, die Alkoholate und/oder die Hydroxide des Natriums und/oder des Kaliums einsetzt.

5. Verfahren nach Ansprüchen 2 bis 4, dadurch gekennzeichnet, dass man die Reaktion bei Temperaturen von 160 bis 250° C durchführt.

6. Verfahren nach Ansprüchen 2 bis 5, dadurch gekennzeichnet, dass man die Reaktion bei 180 bis 230° C durchführt.

7. Verfahren nach Ansprüchen 2 bis 6, dadurch gekennzeichnet, dass man die Reaktion bei Drükken von 1 bis 300 mbar durchführt.

8. Verfahren nach Ansprüchen 2 bis 7, dadurch gekennzeichnet, dass man die Reaktion bei Drükken von 20 bis 150 mbar durchführt.

9. Verfahren nach Ansprüchen 2 bis 8, dadurch gekennzeichnet, dass man die Katalysatoren in Mengen von 0,01 bis 5 Gew.-%, bezogen auf die Menge an 2-Alkylcarbonatethanphosphonsäuredialkylester, einsetzt.

10. Verfahren nach Ansprüchen 2 bis 9, dadurch gekennzeichnet, dass man die Katalysatoren in Mengen von 0,1 bis 3 Gew.-%, bezogen auf die Menge an 2-Alkylcarbonatethanphosphonsäuredialkylester, einsetzt.

## Claims

1. Dialkyl 2-alkylcarbonatoethanephosphonates of the formula

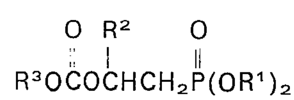

wherein

$R^1$ and $R^3$ are identical or different and each represents an alkyl group with 1 to 4 carbon atoms, and

$R^2$ denotes hydrogen, an alkyl group with 1 to 4 carbon atoms or phenyl.

2. A process for preparing dialkyl vinylphosphonates of the formula

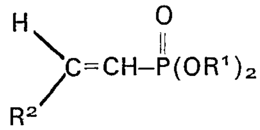

wherein

$R^1$ represents an alkyl group with 1 to 4 carbon atoms, and

$R^2$ represents hydrogen, an alkyl group with 1 to 4 carbon atoms or phenyl,

characterised in that dialkyl 2-alkylcarbonatoethanephosphonates of the general formula

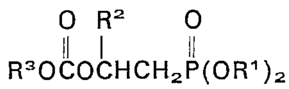

wherein

$R^1$ and $R^3$ are identical or different and each represents an alkyl group with 1 to 4 carbon atoms, and

$R^2$ denotes hydrogen, an alkyl group with 1 to 4 carbon atoms or phenyl,

are heated in the presence of catalysts.

3. A process according to Claim 2, characterised in that the catalysts used are the hydroxides, alcoholates or the alkaline-reacting salts of lithium, sodium, potassium, rubidium, caesium, magnesium, calcium, zinc, strontium, cadmium, barium, thallium and/or lead.

4. A process according to Claim 2 and 3, characterized in that the carbonates, the carboxylates, the alcoholates and/or the hydroxides of sodium and/or of potassium are used.

5. A process according to Claims 2 to 4, characterized in that the reaction is carried out at temperatures of 160 to 250° C.

6. A process according to Claims 2 to 5, characterised in that the reaction is carried out at 180 to 230° C.

7. A process according to Claims 2 to 6, characterised in that the reaction is carried out under pressures of 1 to 300 mbar.

8. A process according to Claims 2 to 7, characterised in that the reaction is carried out under pressures of 20 to 150 mbar.

9. A process according to Claims 2 to 8, characterised in that the catalysts are used in amounts of 0.01 to 5% by weight, relative to the amount of dialkyl 2-alkylcarbonatoethanephosphonate.

10. A process according to Claims 2 to 9, characterised in that the catalysts are used in amounts of 0.1 to 3% by weight, relative to the amount of dialkyl 2-alkylcarbonatoethanephosphonate.

## Revendications

1. 2-alkylcarbonatoéthanephosphonates de dialkyles de formule

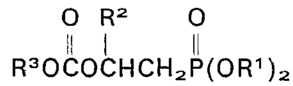

dans laquelle

$R^1$ et $R^3$ sont identiques ou différents et représentent chacun un groupe alkyle en $C_1$-$C_4$ et

$R^2$ représente l'hydrogène ou un groupe alkyle en $C_1$-$C_4$ ou un groupe phényle.

2. Procédé pour la fabrication de vinylphosphonates de dialkyles de formule

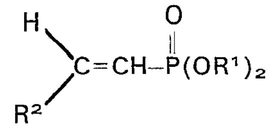

dans laquelle

$R^1$ représente un groupe alkyle en $C_1$-$C_4$ et

$R^2$ représente l'hydrogène ou un groupe alkyle en $C_1$-$C_4$ ou un groupe phényle,

caractérisé en ce que l'on chauffe en présence de catalyseurs des 2-alkylcarbonatoéthanephosphonates de dialkyles de formule générale

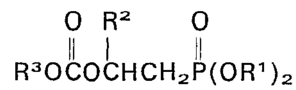

dans laquelle

$R^1$ et $R^3$ sont identiques ou différents et représentent chacun un groupe alkyle en $C_1$-$C_4$ et

$R^2$ représente l'hydrogène ou un groupe alkyle en $C_1$-$C_4$ ou un groupe phényle.

3. Procédé selon la revendication 2, caractérisé en ce que l'on utilise comme catalyseurs les hydroxydes, alcoolates ou sels à réaction alcaline de lithium, sodium, potassium, rubidium, césium, magnésium, calcium, zinc, strontium, cadmium, baryum, thallium et/ou plomb.

4. Procédé selon les revendications 2 et 3, caractérisé en ce que l'on utilise les carbonates, les carboxylates, les alcoolates et/ou les hydroxydes de sodium et/ou de potassium.

5. Procédé selon les revendications 2 à 4, caractérisé en ce que l'on met en œuvre la réaction à des températures de 160 à 250° C.

6. Procédé selon les revendications 2 à 5, caractérisé en ce que l'on met en œuvre la réaction à 180-230° C.

7. Procédé selon les revendications 2 à 6, caractérisé en ce que l'on met en œuvre la réaction sous des pressions de 1 à 300 mbar.

8. Procédé selon les revendications 2 à 7, caractérisé en ce que l'on met en œuvre la réaction sous des pressions de 20 à 150 mbar.

9. Procédé selon les revendications 2 à 8, caractérisé en ce que l'on utilise les catalyseurs en quantités de 0,01 à 5% en poids par rapport à la quantité de 2-alkylcarbonatoéthanephosphonates de dialkyles.

10. Procédé selon les revendications 2 à 9, caractérisé en ce que l'on utilise les catalyseurs en quantités de 0,1 à 3% en poids par rapport à la quantité de 2-alkylcarbonatoéthanephosphonates de dialkyles.